# EUROPEAN PATENT APPLICATION

(11) **EP 2 676 964 A1**
(43) Date of publication of application: **25.12.2013**
(21) Application number: 12004573.7
(22) Date of filing: 18.06.2012
(51) Int. Cl.: C07F 15/00

(54) **Preparation of heteroleptic metal complexes**

(71) Applicant: SOLVAY SA, 1120 Bruxelles (BE)
(72) Inventor: The designation of the inventor has not yet been filed
(74) Representative: Langfinger, Klaus Dieter

(57) **Abstract**

A process for the manufacture of heteroleptic complexes of a transition metal M having the general formula [M(L)ₙL'] wherein M is Ir, Rh, Pt or Pd and n is 2 for M = Ir or Rh and n is 1 for M = Pt or Pd and L is a bidentate cyclometallated ligand coordinated to the metal M through covalent metal-C and dative donor-atom-metal bonds, by reacting a halo-bridged dimer of general formula [LₙM(µ-X)₂)MLₙ] with a bidentate ligand compound of formula L'-H or a halo-bridged dimer of general formula [L'ₙM(µ-X)₂-ML'ₙ] with a ligand compound of formula L-H where (µ-X) represents a bridging halide in a solvent mixture of an organic solvent and water comprising more than 25 vol% of water at a temperature of from 50 to 260 °C in the presence of from 0 to 5 molar equivalents relative to the number of moles of halide X- ion introduced into the reaction mixture through the halo-bridged dimer of a scavenger for halide X- ion and in the presence of from 0 to 0.8 moles, based on the molar amount of transition metal in the halo-bridged dimer of an added salt and of from 0 to 10 vol%, based on the total volume of the solvent mixture, of a solubilisation agent increasing the solubility of the halo-bridged dimer in the reaction mixture.

## Description

### Technical field

The present invention relates to a process for the manufacture of heteroleptic metal complexes which are typically used in organic devices such as organic light emitting diodes (OLEDs). More specifically the present invention relates to such a process wherein a solvent mixture comprising water and an organic solvent is used.

### Background Art

Cyclometallated metal complexes of transition metals (e.g., rhodium, iridium and platinum) are useful due to their photophysical and photochemical properties. Especially, these compounds are used as phosphorescent emitters in OLEDs due to their strong emission from triplet excited states.

Phosphorescent emitters used in OLEDs are mostly based on cyclometallated metal complexes, preferably iridium complexes wherein bidentate cyclometallated ligands are coordinated to metal through covalent metal-C and/or dative N-metal bonds.

While the term homoleptic refers to complexes wherein all ligands are identical in structure, the term heteroleptic designates complexes comprising at least two different ligands.

Heteroleptic complexes are of particular interest because their photophysical, thermal and electronic properties as well as their solubility can be tuned by selecting appropriate ligands respectively combinations of ligands.

In addition, it has been observed in some cases (e.g. US2010/0141127A1, line 0103) that heteroleptic complexes could yield better device lifetimes in organic electronic devices.

US 2008/312396 discloses a process for the manufacture of metal complexes (heteroleptic as well as homoleptic) starting from metal halide complexes (e.g. IrCl₃·xH₂O) in a mixture of an organic solvent and water and in the presence of added salts comprising at least two oxygen atoms in a certain minimum molar amount which preferably exceeds the molar amount of metal introduced through the starting materials.

WO2005/042548 describes the synthesis of heteroleptic transition metal complexes [M(L)ₙL'] by reacting a halo bridged dimer [LₙM(µ-X)₂MLₙ] with an organometallic derivative of an arylpyridine L' ligand.

WO2009/073245 discloses heteroleptic complexes comprising two bidentate cyclometalating 2-phenylpyridine type ligands with different alkyl or aryl substituents. The synthesis described is a complicated multistep process involving reactions on a single ligand of a preformed tris homoleptic complex. The heteroleptic complex is in fact obtained by chemical modification of one of the ligands of a homoleptic complex. The sequence is the following: starting from a tris homoleptic complex which has to be synthesized first, followed by bromination with NBS of one the three ligands, then by boronic ester formation on this ligand, and finally by coupling of this ligand with a bromo arene to form the second type of ligand and thus the heteroleptic complex. Given the way this synthesis is performed, the two ligands involved in the final heteroleptic complexes must have the same basic structure (e.g. the same 2-phenylpyridine main core structure), which appears rather restrictive. Another type of heteroleptic complexes synthesis which is described in this reference proceeds as follows: chloro-bridged iridium dimer [L₂Ir(µ-Cl)₂IrL₂] synthesis; dimer treatment with silver triflate in CH₂Cl₂/MeOH or in ethanol to remove the chloride ligands; treatment of the intermediate "Ir triflate" with the 2^{nd} type of ligand in tridecane at 190°C overnight. By doing so, a mixture of four compounds is formed due to ligands scrambling, which mixture has to be purified by column chromatography, recrystallization and sublimation. With certain ligands (compound 12), the last reaction could be performed more selectively in ethanol at reflux for 16h.

US2010/0244004 discloses heteroleptic complexes involving two different bidentate cyclometalating 2-phenylpyridine type ligands which comprise a single pyridyl dibenzo-substituted ligand. The synthesis is as described in WO 2009/073245, i.e. first reaction of halo-bridged dimer with silver triflate followed by reaction of the "Ir triflate" intermediate with a pyridyl dibenzo-substituted ligand in ethanol at reflux for 16 h.

US2010/141127 discloses heteroleptic complexes comprising 2-phenylpyridine and phenylbenzimidazole type ligands which are prepared in a manner analogous to US 2010/0244004.

WO 2010/027583 describes heteroleptic complexes involving two bidentate cyclometalating 2-phenylpyridine type ligands with different alkyl and/or aryl substituents. They are mainly prepared using two synthetic routes. One consists of the already mentioned route which involves reacting an "iridium triflate" intermediate with a second ligand in an organic solvent, in most cases ethanol. Due to ligand scrambling, whose extent is rather unpredictable a priori, this route is expected to lead to a mixture of product compounds, which renders the purification of the desired product more difficult. The other manufacturing process follows a multistep synthesis: dimer synthesis; dimer treatment with silver triflate; "Ir triflate" intermediate reaction with boronic ester precursor of the 2^{nd} type ligand (which has to be prepared before) in ethanol at reflux to form a intermediate tris heteroleptic complex comprising one ligand involving a boronic ester moiety; coupling of the boronic ester form with a bromo arene to form the 2^{nd} type of ligand and thus the final heteroleptic complex and is thus rather complicated and time consuming as well as economically disadvantageous.

None of the documents cited above satisfactorily meets the requirements for an economically and technically feasible method of preparing heteroleptic metal complexes, particularly those involving at least two bidentate cyclometallated ligands coordinated to metal through covalent metal-C and/or dative N-metal bonds which are based on different main core structures, and particularly at a relatively low temperature with good selectivity and with high yields, starting from metal halide complexes or halo-bridged dimers, with cost-effectiveness. Thus, there has been a need for a new preparation method for heteroleptic complexes, which can better satisfy the requirements indicated above.

### Summary of invention

It was thus an object of the present invention to provide a process for the manufacture of heteroleptic transition metal complexes which can overcome the above-described disadvantages and which can lead to high yields even at low temperatures and which is particularly well-suited for heteroleptic complexes involving bidentate cyclometallated ligands with different main core structures.

This object is achieved with a process as defined in claim 1. Preferred embodiments of the process in accordance with the present invention are set forth in the dependent claims.

The present invention thus provides a process for the manufacture of heteroleptic complexes of a transition metal M having the general formula M(L)ₙL', wherein M is Ir, Rh, Pt or Pd and n is 2 for M = Ir or Rh and n is 1 for M = Pt or Pd and L is a bidentate cyclometallated ligand coordinated to the metal M through covalent metal-C and dative donor atom-metal bonds (the donor atom preferably being a nitrogen atom) and L' is a bidentate ligand, by reacting a halo-bridged dimer of general formula [LₙM(p-X)₂-MLₙ] with a ligand compound of formula L'-H or a halo-bridged dimer of general formula [L'ₙM(µ-X)₂-ML'ₙ] with a ligand compound of formula L-H where (µ-X) represents a bridging halide, in a solvent mixture of an organic solvent and water comprising more than 25 vol% of water at a temperature of from 50 to 260 °C, optionally in the presence of from 0 to 5 molar equivalents, relative to the number of moles of halide X- ion introduced into the reaction mixture through the halo-bridged dimer, of a scavenger for halide X- ion and of from 0 to less than 1 molar equivalent relative to the molar amount of transition metal in the halo-bridged dimer, of an added salt, and of from 0 to 10 vol%, based on the total volume of the solvent mixture, of a solubilisation agent increasing the solubility of the halo-bridged dimer in the reaction mixture.

In the course of the present invention, it has been surprisingly found that the use of a mixture of an organic solvent and water comprising more than 25 vol% of water, based on the volume of the overall solvent mixture, can lead to a good selectivity and yield towards the desired heteroleptic complexes.

The yield of the desired heteroleptic complexes is usually at least 30, preferably at least 40 % and the selectivity towards the desired heteroleptic compound is usually more than 70, more preferably more than 75 and particularly preferably more than 80 %.

The process of the present invention works well with a large variety of ligands and thus the ligand structure is not subject to a particular limitation and can be selected from those ligands known to the skilled person and described in the literature. Respective ligands suitable for complexes useful in organic electronic devices have been described in the literature so that no detailed explanation needs to be given here.

In accordance with the process of the present invention, a halo-bridged dimer of general formula [LₙM(µ-X)₂MLₙ] or [L'ₙM(µ-X)₂ML'ₙ] is used as a starting material. Such halo bridged dimers can be obtained according to known processes described in the literature, e.g. from metal halides MX₃·xH₂O reaction with ligand compounds L-H or L'-H. Respective processes are known to the skilled person and described in the literature.

As mentioned before, the structure of the ligand L is not subject to particular limitations and can be selected from those ligands known to the skilled person for transition metal complexes.

The same applies to the ligand compound L'-H, wherein L' can again be selected from any type or structure of ligands described in the prior art and known to the skilled person.

In accordance with a preferred embodiment of the present invention, at least one of ligands L and L' used is a bidentate ligand of general formula (1) 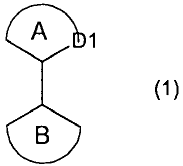 wherein

A is selected from the group consisting of five- or six-membered aryl or heteroaryl rings and fused rings, which is bound to the transition metal via the D1 donor atom, which is preferably a nitrogen atom and may be substituted with a substituent R,

B is selected from the group consisting of five- or six-membered aryl or heteroaryl rings and fused rings, which may be substituted with a substituent R and which ring is coordinated to the transition metal through a covalent metal-carbon bond,

A and B are linked through a covalent C-C, C-N or N-N bond,
Suitable substituents R, which may be the same or different on each occurrence are halogen, NO₂, CN , NH₂, NHR¹, N(R¹)₂, B(OH)₂, B(OR¹)₂, CHO, COOH, CONH₂, CON(R¹)₂, CONHR¹, SO₃H, C(=O)R¹, P(=O)(R¹)₂, S(=O)R¹, S(=O)₂R¹, P(R¹)₃⁺, N(R¹)₃⁺, OH, SH, Si(R¹)₃, a straight chain substituted or unsubstituted alkyl or alkoxy group having 1 to 20 carbon atoms or a branched or cyclic alkyl or alkoxy group with 3 to 20 carbon atoms, wherein in each instance one or more non-adjacent CH₂ groups may be optionally replaced by -0-, -S-, -NR¹-, -CONR¹-, -CO-O-, - CR¹=CR¹- or -C≡C-, a haloalkyl, a substituted or unsubstituted aromatic or heteroaromatic ring system having 5 to 30 ring atoms or a substituted or unsubstituted aryloxy, heteroaryloxy or heteroarylamino group having 5 to 30 ring atoms. The substituents in these ring systems may, if present, preferably be selected from the substituents defined above for R.

Two or more substituents R, either on the same or on different rings may define a further mono- or polycyclic, aliphatic or aromatic ring system with one another or with a substituent R¹.

R¹, which may be the same or different on each occurrence, may be a straight chain alkyl or alkoxy group having 1 to 20 carbon atoms or a branched or cyclic alkyl or alkoxy group with 3 to 20 carbon atoms, a substituted or unsubstituted aromatic or heteroaromatic ring system having 5 to 30 ring atoms or a substituted or unsubstituted aryloxy, heteroaryloxy or heteroarylamino group having 5 to 30 ring atoms. The substituents in these ring systems may, if present, preferably be selected from the substituents defined above for R.

Two or more substituents R¹, either on the same or on different rings may define a further mono- or polycyclic, aliphatic or aromatic ring system with one another or with a substituent R.

Subject to the proviso that at least one difference is present, in accordance with another preferred embodiment of the process in accordance with the present invention, L and L' may both be selected from ligands of formula (1).

Ring A, comprising donor atom D1, is preferably selected from five- or six-membered heteroaryl groups, especially preferably 5-membered heterocycles selected from

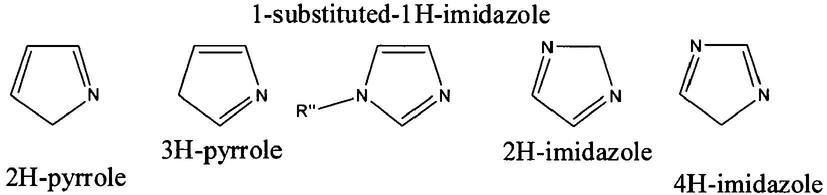

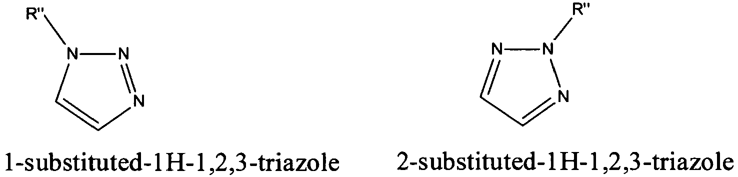

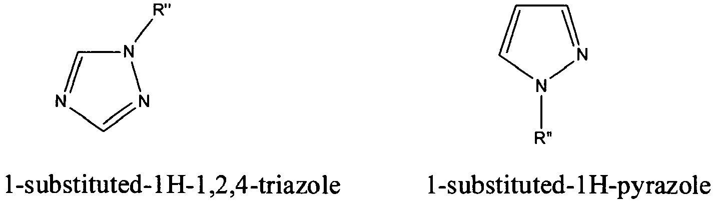

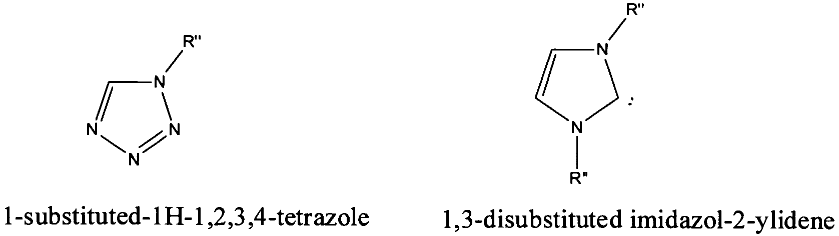

wherein R" may be selected from a broad variety of substituents, which include B ring as well as the group consisting of hydrogen, alkyl, alkenyl, alkynyl, arylalkyl, aryl and heteroaryl groups.

or from

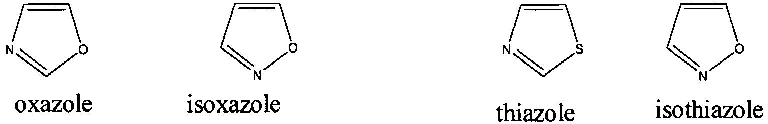

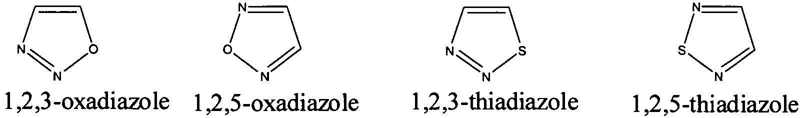

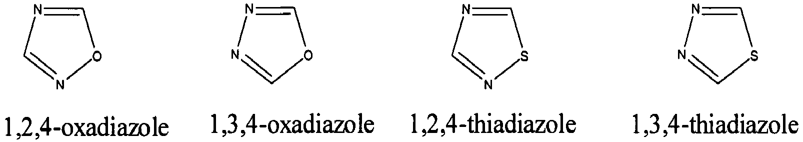

and 6-membered heterocycles selected from

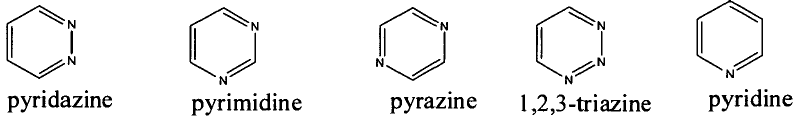

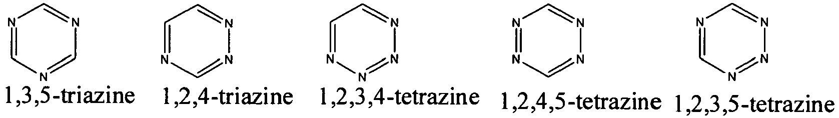

A may also form part of an annealed ring system, wherein one of the rings resembles a structure as given above.

Preferred examples for such an annealed ring A are the following

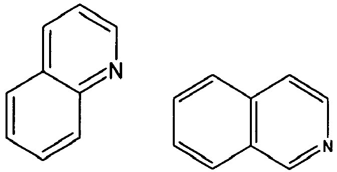

In accordance with a particularly preferred embodiment ring A is selected from five or six membered heteroaryl groups as defined above, which five or six membered heteroaryl group is bound to the metal via donor atom D1, which is a neutral nitrogen atom.

B is selected from five or six membered aryl or heteroaryl groups, wherein the heteroaryl groups may be preferably selected from the group as given above for ring A. A particularly preferred aryl group for ring B is phenyl, biphenyl or napthyl.

Ring B may also form part of a un-substituted or substituted carbazolyl group or of a un-substituted or substituted dibenzofuranyl group.

Ring B may also form part of a 9,9'-spirobifluorene unit or of a 9,9-diphenyl 9H fluorene unit which are reproduced below (generally referred to as SBF or Open SBF, respectively).

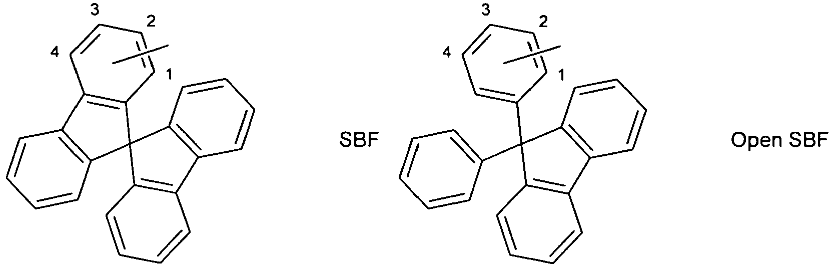

The attachment of the SBF or open SBF unit to the remainder of the molecule can be preferably in 2, 3 or 4 position of the SBF or Open SBF unit, the attachment in position 2 or 3 being most preferred.

The metal M in the halo-bridged dimer in accordance with the present invention represents one of the transition metals Ir, Rh, Pt or Pd, preferably Ir or Pt and most preferably Ir.

A preferred group of ligands of formula (1) (from which L and/or L' may be selected) is represented by the following general formulae:

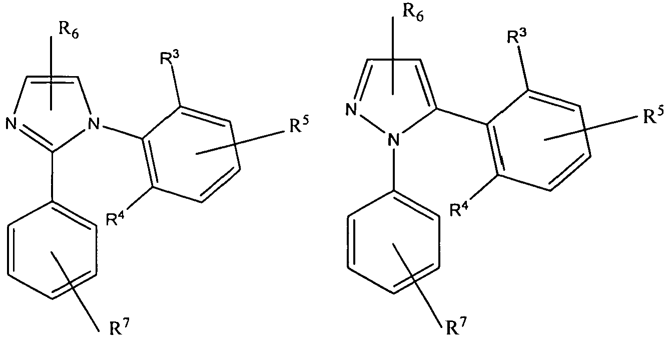

wherein R³ and R⁴ substituents may be the same or different and are groups other than H, like alkyl, cycloalkyl, aryl and heteroaryl group and wherein R⁵ to R⁷ may be the same or different and may be selected from the group consisting of hydrogen, halogen, alkyl, alkoxy, amino, cyano, alkenyl, alkynyl, arylalkyl, aryl and heteroaryl group. In case R⁵ to R⁷ are different from hydrogen, the rings may bear one, two or three respective substituents. Preferably both R³ and R⁴ substituents are alkyl groups, preferably alkyl groups containing from 1 to 4 carbon atoms. Preferred R⁵ substituents are selected from the group consisting of H, alkyl, heteroaryl and aryl group; when R⁵ is an aryl or heteroaryl group, it is preferably attached in para position to the bond with the imidazole or pyrazole moiety.

Most preferred ligands of this type are the following:

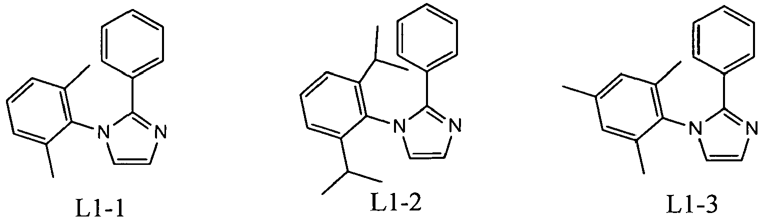

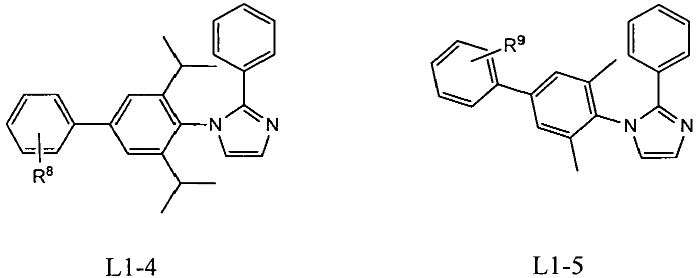

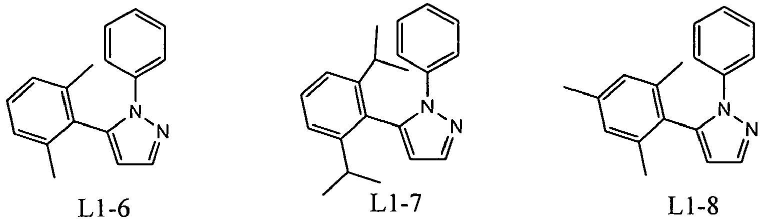

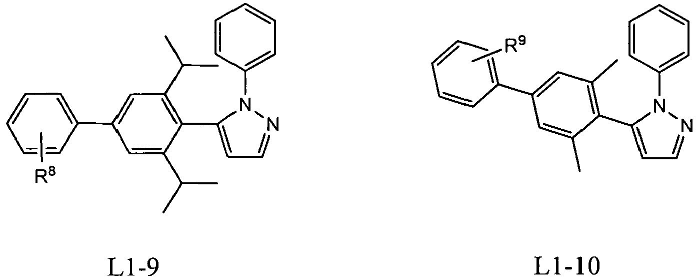

wherein R⁸ and R⁹ are selected from the group consisting of H, alkyl, heteroaryl and aryl groups, preferably from the group consisting of H and alkyl groups containing from 1 to 4 carbon atoms.

Another preferred group of ligands of formula (1) (from which L and/or L' may be selected) is represented by the following general formulae:

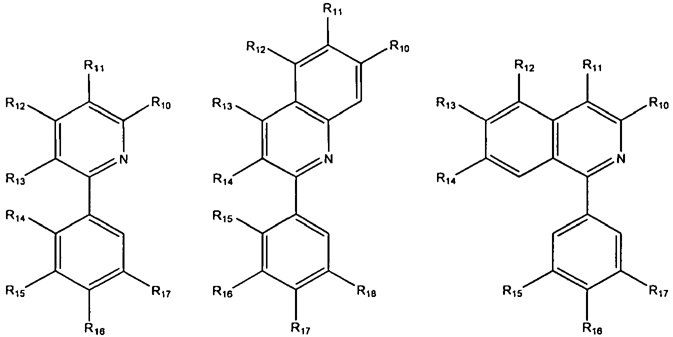

wherein R¹⁰ to R¹⁸ may be the same or different and may be selected from the group consisting of hydrogen, halogen, alkyl, alkoxy, amino, cyano, alkenyl, alkynyl, arylalkyl, aryl and heteroaryl group.

Particularly preferred ligands of this type are the following:

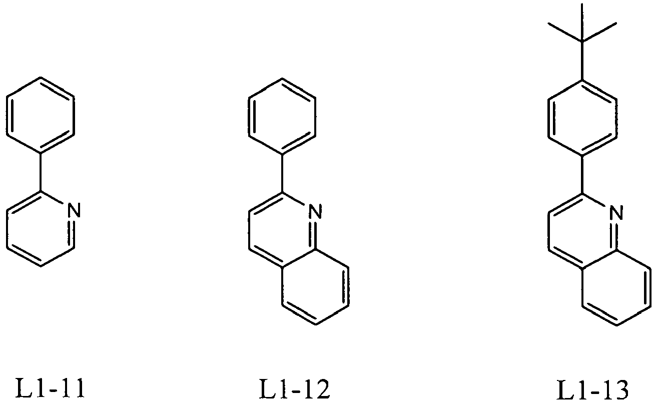

Another preferred group of ligands is selected from those compounds where ring B is part of a SBF or open SBF group and A is selected from the groups referred to above.

Only by way of example, the following ligands may be mentioned here in this regard

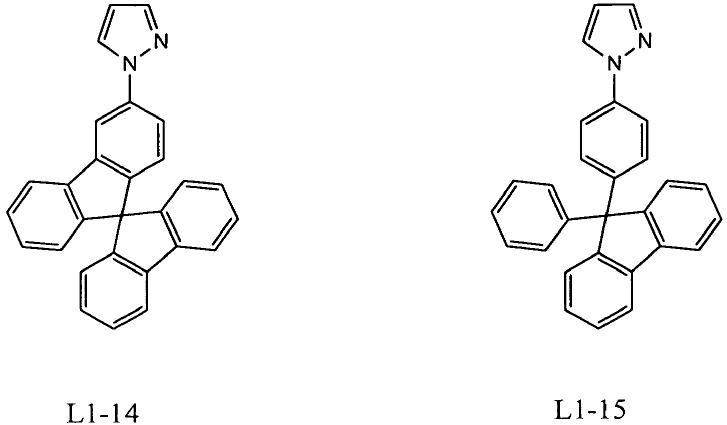

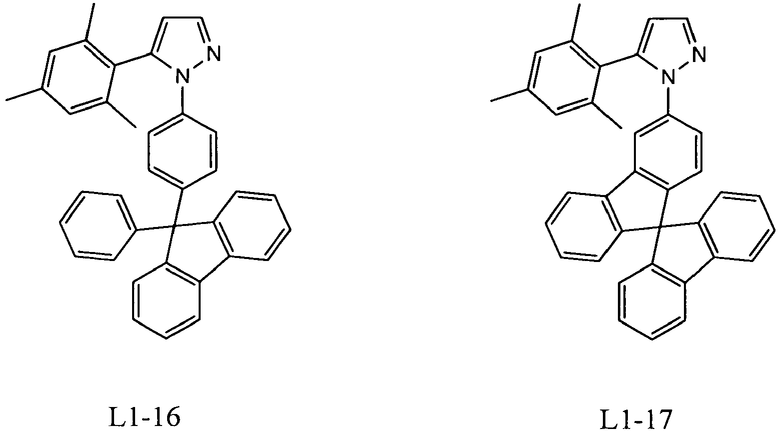

In accordance with another preferred embodiment of the process of the present invention, L and/or L' , even more preferably L and L', are selected from cyclometallated ligand selected from the group consisting of phenylpyridine derivatives, phenylimidazole derivatives, phenylisoquinoline derivatives, phenylquinoline derivatives, phenylpyrazole derivatives, phenyltriazole derivatives and phenyltetrazole derivatives.

The halide X- in the halo-bridged dimer is selected from Cl⁻, Br⁻, I⁻ and F-, most preferably X⁻ is chloride or bromide.

In accordance with the process of the present invention, the reaction of halo bridged dimer with ligand compound is carried out in a mixture of an organic solvent and water, which mixture comprises more than 25 vol% of water. The mixture preferably contains not more than 70 vol.% of an organic solvent and at least 30 vol.% of water, and more preferably not more than 66 vol.% of an organic solvent and at least 34 vol.% of water. A water content of 40 to 60 % by volume has proven to be particularly suitable.

The organic solvent may be any solvent which is miscible with water to form a single phase, i.e. a solution. Preferably, the organic solvent may be at least one selected from a group consisting of C_{1~}C₂₀ alcohols, for example, methanol, ethanol, n-propanol, isopropanol, n-butanol, isobutanol or tert-butanol, oxanes, for example, dioxane or trioxane, C₁~C₂₀ alkoxyalkyl ethers, for example, bis(2-methoxyethyl) ether, C₁~C₂₀ dialkyl ethers, for example, dimethyl ether, C_{1~}C₂₀ alkoxy alcohols, for example, methoxyethanol or ethoxyethanol, diols or polyalcohols, for example, ethylene glycol, propylene glycol, triethylene glycol or glycerol, polyethylene glycol, or dimethyl sulfoxide (DMSO), N-methyl pyrrolidone (NMP) or dimethyl formamide (DMF), and combinations thereof. More preferably, the organic solvent may be at least one selected from a group consisting of dioxane, trioxane, bis(2-methoxyethyl) ether, 2-ethoxyethanol and combinations thereof. Most preferably, the organic solvent is dioxane or bis(2-methoxyethyl) ether (hereinafter referred to as diglyme)

The reaction temperature is in the range of from 50 to 260 °C, preferably in the range of from 80 to 150 °C.These reaction conditions are significantly milder than the reaction conditions of the prior art and offer the advantage that the reaction can also be carried out with thermally and/or chemically sensitive ligands, and that ligand-exchange reactions remain limited at these temperatures.

In some specific embodiments, the isomer is prepared at a pressure of from 1 × 10³ to 1 × 10⁸ Pa, preferably 1 × 10⁴ to 1 × 10⁷ Pa, and most preferably 1 × 10⁵ to 1 × 10⁶ Pa.

The ligand compound L'-H is preferably used in a molar excess, relative to the amount of metal in the halo-bridged dimer. In a more specific embodiment, the ligand compound is used in an amount of 10 to 3000 mol percent excess, preferably 50 to 1000 mol percent excess, most preferably 100 to 800 mol percent excess.

The process in accordance with the present invention can be carried out in the presence or in the absence of a scavenger for halide ion X-. If halide ion scavenger is present, it is used in amount of up to 5, preferably up to 3 moles per mole of halide X⁻ ion introduced into the reaction mixture through the halo-bridged dimer. Preferred scavengers are silver salts. Most preferred silver salts are tetrafluoroborate, trifluoroacetate or triflate.

The process in accordance with the present invention can be carried out in the presence or in the absence of added salts. If salt is present, it is used in an amount of less than 1, preferably up to 0.5 moles per mole of metal in the halo-bridged dimer. Most preferably however, no salt is added.

If salt is added, salts containing at least two oxygen atoms are preferably used.

Suitable salts containing at least two oxygen atoms can be either organic or inorganic. Zwitterionic compounds (the so-called internal salts) can also be used in accordance with the present invention. At least one of the oxygen atoms in the said salts with at least two oxygen atoms may be negatively charged. The oxygen atoms may be further bonded in the salts in a 1,3-, 1,4- or 1,5-arrangement, which means that the two oxygen atoms may be bound to the same or different atoms. 1,3 arrangement means that the two oxygen atoms are bound to the same atom, whereas 1,4 and 1,5 refer to structures where the oxygen atoms are not bound to the same atom, but with two respectively three atoms in between the two oxygen atoms. Examples of inorganic salts are alkali metal, alkaline earth metal, ammonium, tetraalkylammonium, tetraalkylphosphonium and/or tetraarylphosphonium carbonates, hydrogencarbonates, sulfates, hydrogensulfates, sulfites, hydrogensulfites, nitrates, nitrites, phosphates, hydrogenphosphates, dihydrogenphosphates or borates, particularly the respective alkali metal, ammonium and tetraalkylammonium salts. Examples of organic salts are alkali metal, alkaline earth metal, ammonium, tetraalkylammonium, tetraalkylphosphonium and/or tetraarylphosphonium salts of organic carboxylic acids, particularly formates, acetates, fluoroacetates, trifluoroacetates, trichloroacetates, propionates, butyrates, oxalates, benzoates, pyridinecarboxylates, salts of organic sulfonic acids, in particular MeSO₃H, EtSO₃H, PrSO₃H, F₃CSO₃H, C₄F₉SO₃H, phenyl-SO₃H, ortho-, meta- or para-tolyl-SO₃H-, salts of α-ketobutyric acid, and salts of pyrocatechol and salicylic acid.

In certain cases, where the solubility of the halo-bridged dimer in the solvent mixture is very low, it has proven to be advantageous to add up to 10 vol%, preferably of from 0.1 to 10 vol%, even more preferably of from 0.5 to 5 vol%, based on the volume of the solvent mixture, of a solubilising agent to improve the solubility of the dimer in the reaction solvent. DMSO has shown to work particularly well as solubilizing agent in certain cases.

Given that proton ions, H₃O⁺, produced during the reaction may have an inhibitory effect, a neutralization step could be preferably carried out during the reaction in order to improve heteroleptic complex yields. A still other embodiment of the present invention relates to the use of a solvent mixture of an organic solvent and water which comprises more than 25 vol% of water in a process for the preparation of heteroleptic metal complexes [MLₙL'] by reacting a halo-bridged dimer [LₙM(µ-X)₂-MLₙ] with a bidentate ligand compound of formula L'-H or a halo-bridged dimer of general formula [L'ₙM(µ-X)₂-ML'ₙ] with a ligand compound of formula L-H.

The metal complex synthesized in accordance with the process of the present invention can be typically used as phosphorescent emitter in organic devices, e.g., OLEDs. As for the structure of OLEDs, a typical OLED is composed of a layer of organic emissive materials, which can comprise either fluorescent or phosphorescent materials and optionally other materials such as charge transport materials, situated between two electrodes. The anode is generally a transparent material such as indium tin oxide (ITO), while the cathode is generally a metal such as Al or Ca. The OLEDs can optionally comprise other layers such as hole injection layer (HIL), hole transporting layer (HTL), electron blocking layer (EBL), hole blocking layer (HBL), electron transporting layer (ETL) and electron injection layer (EIL).

Phosphorescent OLEDs use the principle of electrophosphorescence to convert electrical energy into light in a highly efficient manner, with internal quantum efficiencies of such devices approaching 100%. Iridium complexes are currently widely used. The heavy metal atom at the center of these complexes exhibits strong spin-orbit coupling, facilitating intersystem crossing between singlet and triplet states. By using these phosphorescent materials, both singlet and triplet excitons can decay radiatively, hence improving the internal quantum efficiency of the device compared to a standard fluorescent emitter where only the singlet states will contribute to emission of light. Applications of OLEDs in solid state lighting require the achievement of high brightness with good CIE coordinates (for white emission).

The above OLEDs comprising phosphorescent emitters obtained in accordance with the present invention can be fabricated by any method conventionally used in the field of organic devices, for example, vacuum evaporation, thermal deposition, printing or coating.

Now, some embodiments will be provided to facilitate the understanding of the present invention. However, it is important to note that the above-described specific embodiments are only described herein for illustrative purposes. The specific procedures, materials or conditions should not be construed in any manner as limiting the scope of the present invention. Further, any other methods, materials or conditions, which are obvious to a person of ordinary skill in the art, are also readily covered by the present invention.

Examples

All the reactions were performed in the dark and under inert atmosphere.

All the chloro-bridged dimers [(L)₂Ir(µ-X)₂Ir(L)₂] mentioned hereafter in the examples were obtained using a well-known procedure which consists to react IrCl₃·xH₂O with a slight excess of the ligand compound L-H (2.5 to 3 mol/mol Ir) in a 3:1 (v/v) mixture of 2-ethoxy-ethanol and water at reflux for ≈ 20 h.

Examples 1 to 5: Synthesis of [Ir(L1-15)₂(L1-1)] heteroleptic complex

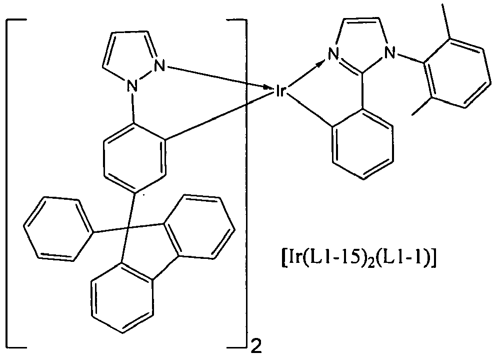

a) Synthesis of L1-15 ligand compound

In a 500 mL round bottom flask flushed with argon was dissolved 9-(4-bromophenyl)-9-phenyl-9*H-*fluorene (33 g, 83.0 mmol) in dry DMF (200 ml). Pyrazole (8.52 g, 125 mmol), Cs₂CO₃ (55 g, 166 mmol), Cu₂O (6 g, 4.15 mmol) and salicylaldoxime (2.29 g, 16.6 mmol) were added to the resulting solution and the mixture was heated at 120°C for 60h. The solution was then diluted with 250 ml of a mixture of hexane/THF (v/v) 8:2. The solution was flushed over a plug of silica which was first eluted with a solution of hexane/THF 9:1 and finally eluted with a solution of hexane/THF (v/v) 65:35. The organic phase was concentrated *in vacuo* and the crude product was further purified by crystallization in ethanol (96%) to yield 28 g of the L1-15 ligand compound as a white solid (87% yield).

b) [Ir(L1-15)₂(L1-1)] heteroleptic complex synthesis

Various dichloro-bridged dimers [(L)₂Ir(µ-Cl)₂Ir(L)₂] (as indicated in Table 1) were reacted in a sealed vial flushed beforehand with argon with various ligand compounds L'-H in a solvent mixture of diglyme and water of 1:1 (volume ratio) in Examples 1 to 3, and in a solvent mixture of diglyme and water in the volume ratio 70:30 in example 4 and in a solvent mixture of diglyme and water in the volume ratio 75:25 in Comparative Example 5 as indicated in table 1. The molar ratio of the reactants is also given in table 1.

In each case, the chloro-bridged dimer concentration in the solvent reaction mixture was equal to 0.005 mol/l and the reaction temperature was 130°C for 144 h. Reaction time was limited to 90 h in example 2.

The two ligands L1-15 and L1-1 involved in these examples are the following:

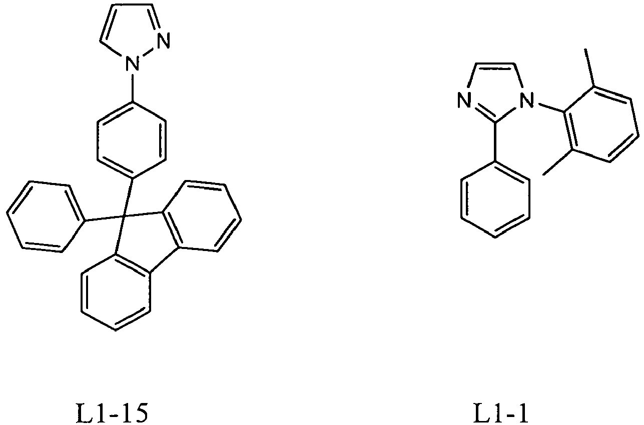

After cooling, the precipitate was filtered off with suction and washed with water and hexane. The "crude" recovered solid could be purified by silica gel column chromatography using CH₂Cl₂/hexane 8:2 (v/v) as the eluent. Table 1 gives the yield data and the purity determined by NMR using octamethylcyclotetrasiloxane as internal standard.

**Table 1**

| Ex.-No. | L in dimer [(L)₂Ir(µ-Cl)₂Ir(L)₂] | L' in ligand compound L'-H | Molar ratio ligand compound:dimer | [Ir(L1-15)₂(L1-1)] yield from ¹H-NMR spectrum of the "crude" recovered solid | [Ir(L1-15)₂(L1-1)] yield after purification by silica gel column chromatography |
|---|---|---|---|---|---|
| 1 | L1-1 | L1-15 | 7:1 | 83% | 71 % NMR purity: 98 wt % By-product: Ir(L1-15)₃ |
| 2 | L1-15 | L1-1 | 7:1 | 78% | - |
| 3 | L1-15 | L1-1 | 3:1 | 54% | 41 % No by-products detected by ¹H-NMR |
| 4 | L1-1 | L1-15 | 6.9:1 | 27% | - |
| 5 (comp.) | L1-1 | L1-15 | 7:1 | 13% | - |

Surprisingly, the main product obtained is always the heteroleptic complex [Ir(L1-15)2(L1-1)] independently of the type of dimer [(L1-15)₂Ir(µ-Cl)₂Ir(L1-15)₂] or [(L1-1)₂Ir(µ-Cl)₂Ir(L1-1)₂] used as starting material.

The results of the experiments of examples 1 and 4 show that the ratio of organic solvent and water significantly influences the amount of the desired product obtained.

By-products are only observed in minor quantities. The main by-product in the purified sample of example 1 was the tris homoleptic complex Ir(L1-15)3 while in example 3 no by-product was detected by ¹H-NMR in the purified sample.

Example 6: Synthesis of [Ir(L1-15)₂(L1-2)] heteroleptic complex

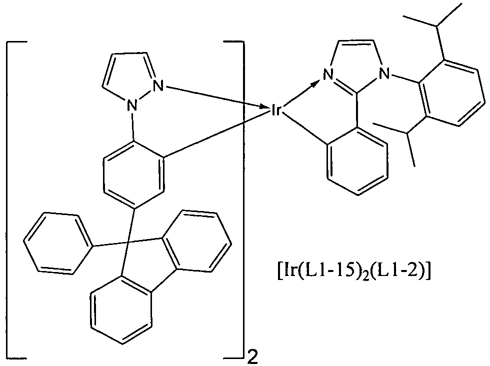

[Ir(L1-15)₂(L1-2)] heteroleptic complex was obtained using the same conditions as [Ir(L1-15)₂(L1-1)] in example 1 replacing [(L1-1)₂Ir(µ-Cl)₂Ir(L1-1)₂] dimer involving L1-1 ligand by [(L1-2)₂Ir(µ-Cl)₂Ir(L1-2)₂] dimer which involves L1-2 ligand. Isolated yield after purification by silica gel column chromatography using CH₂Cl₂/hexane 8:2 (v/v) as the eluent was equal to 40 %. As in example 1, the main by-product is the tris homoleptic complex [Ir(L1-15)₃] (3 mol %).

Example 7: Synthesis of [Ir(L1-16)₂(L1-1)] heteroleptic complex

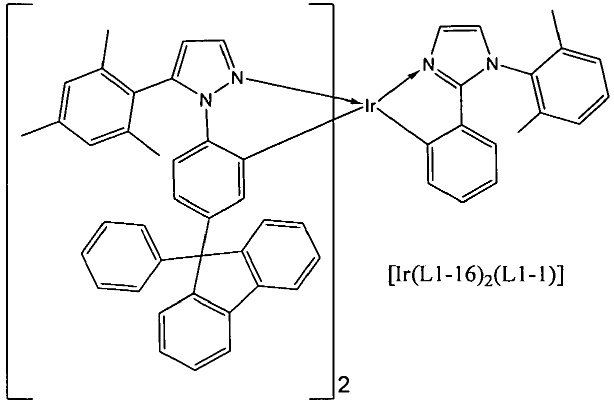

a) Synthesis of L1-16 ligand compound

### 1°) 1^{st} step

In a 1l round bottom flask was dissolved 1-(4-(9-phenyl-9H-fluoren-9-yl)phenyl)-pyrazole (28 g, 71.3 mmol) in dry THF (400ml) and the mixture was cooled to -40°C. n-BuLi 1.6M in hexane (62.5 ml, 100 mmol) was added dropwise and the solution left under stirring at this temperature for 2 h. The solution was further cooled to -60°C and a solution of CBr₄ (37.5 g, 113 mmol) in dry THF (150 ml) was added dropwise. The resulting solution was allowed to stir for 1 h at this temperature. The solution was quenched with a saturated solution of NH₄Cl (200 ml) and extracted two times with MTBE (300 ml). The organic phase was dried over MgSO₄ and concentrated under vacuum. The crude solid was purified by flash column chromatography using hexane/ethyl acetate 7:3 (v/v) as the eluent. The product was further purified by crystallization using ethanol/toluene (v/v) 98.5:1.5 yielding the product as a whitish solid (74% yield).

### 2°) 2^{nd} step

The previously prepared compound (4.55 g, 9.66 mmol) and 2,4,6 trimethylphenyl boronic acid (2.5 g, 15.2 mmol) were dissolved in a mixture of dioxane/water 91:9 and the resulting solution subsequently degassed. K₃PO₄ (6.6 g, 31.1 mmol) followed by Pd₂dba₃ (0.435 g, 0.475 mmol) and 2-Dicyclohexylphosphino-2',6'-dimethoxybiphenyl (SPhos, 0.780 g, 1.90 mmol) in solution in 50 ml degassed dioxane were added to the solution. After 8h of stirring at reflux temperature the reaction was quenched with water (200 ml) and extracted with Methyl-tert-butyl ether (MTBE, 200 ml). The organic phase was washed with saturated sodium chloride solution (200 ml), dried over MgSO₄ and concentrated under vacuum. The crude solid was purified with silica gel column chromatography using hexane/ethyl acetate (v/v) 85:15 as the eluent. The product was then washed twice with hot hexane (20 ml) to yield the pure L1-16 ligand compound as a white solid (50% yield).

b) [Ir(L1-16)₂(L1-1)] heteroleptic complex synthesis

[Ir(L1-16)₂(L1-1)] heteroleptic complex was obtained similarly to [Ir(L1-15)₂(L1-1)] in example 1 replacing L1-15 ligand compound by L1-16 ligand compound. Yield after purification by silica gel column chromatography using CH₂Cl₂/hexane 8:2 (v/v) as the eluent was equal to 15 %.

Example 8: Synthesis of [Ir(L1-16)₂(L1-1)] heteroleptic complex using Ag⁺ variant

To 0.261 g of [(L1-1)₂Ir(µ-Cl)₂Ir(L1-1)₂] dimer were successively added 10 ml of CH₂Cl₂ and 0.098 g of silver triflate dissolved in 10 ml of methanol. After being stirred for 2 hours at room temperature, the resulting mixture was filtered and evaporated to dryness. 20 ml of a solvent mixture of dioxane and water of 1:1 volume ratio was poured onto the residue. The resulting mixture was transferred into a Büchi Miniclave glass autoclave flushed with argon. After having added 0.735 g of the ligand compound L1-16, the reaction mixture was heated at 130 °C for 144 h. After cooling, the precipitate was filtered off with suction and washed with water and hexane. Isolated yield after purification by silica gel column chromatography using CH₂Cl₂/hexane 8:2 (v/v) as the eluent was equal to 47 %, largely higher than in example 7 performed without any added silver triflate, the tris homoleptic [Ir(L1-16)₃] appearing as the main impurity (yield: 15 %).

Example 9: Synthesis of [Ir(L1-12)₂(L1-1)] heteroleptic complex

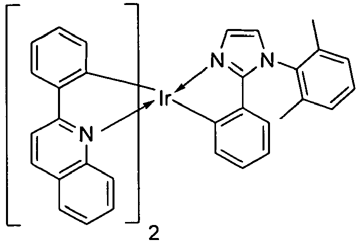

[Ir(L1-12)₂(L1-1)]

To a 100 ml vial flushed with argon were introduced 0.403 g of the chloro-bridged dimer [(L1-12)₂Ir(µ-Cl)₂Ir(L1-12)₂], 0.239 g of 1-(2,6-dimethylphenyl)-2-phenyl-1H-imidazole L1-1 ligand compound (L1-1 ligand/dimer molar ratio: 3.0 mol/mol) and 60 ml of a 1:1 v/v mixture of diglyme and water. After sealing, the vial was heated under stirring at 130°C for 144 hours. After cooling, the precipitate was filtered off with suction and washed with water and hexane. The crude solid was purified by silica gel column chromatography using CH₂Cl₂/hexane 8:2 (v/v) as the eluent to give 0.263 g of the desired heteroleptic complex (yield: 49 %). No other product could be detected by ¹H-NMR analysis (NMR purity using octamethylcyclotetrasiloxane as internal standard: 100 wt %).

Example 10: Synthesis of [Ir(L1-12)₂(L1-2)] heteroleptic complex

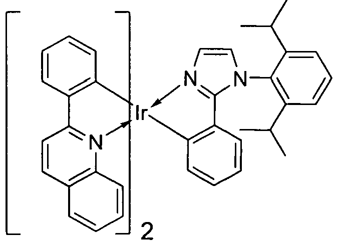

[Ir(L1-12)₂(L1-2)]

[Ir(L1-12)₂(L1-2)] heteroleptic complex was obtained using the same conditions as for [Ir(L1-12)₂(L1-1)] in example 9 replacing L1-1 ligand compound by L1-2 ligand compound. Yield estimated from NMR analysis of the "crude" recovered product was equal to 47 %. Isolated yield after purification by silica gel column chromatography using CH₂Cl₂/hexane 8:2 (v/v) as the eluent was equal to 44 %. No other product could be detected by ¹H-NMR analysis (NMR purity using octamethylcyclotetrasiloxane as internal standard : 100 wt %).
A higher yield (→ 72 % from NMR analysis of the "crude" recovered product) was obtained by using a larger excess of L1-2 ligand (L1-2 ligand/dimer molar ratio: 7.0 mol/mol), the other conditions being unchanged.

Example 11: Synthesis of [Ir(L1-13)₂(L1-1)] heteroleptic complex

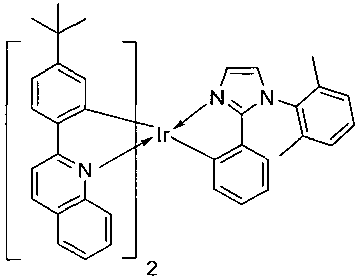

[Ir(L1-13)₂(L1-1)]

[Ir(L1-13)₂(L1-1)] heteroleptic complex was obtained using the same conditions as for [Ir(L1-12)₂(L1-1)] in example 9 replacing the starting dichloro-bridged dimer by the one involving L1-13 ligand and using a Büchi Miniclave glass autoclave as reactor instead of a sealed vial. Isolated yield after purification by silica gel column chromatography using CH₂Cl₂/hexane 8:2 (v/v) as the eluent was equal to 45 %. No other product could be detected by ¹H-NMR analysis (NMR purity using octamethylcyclotetrasiloxane as internal standard : 98 wt %).

Example 12 : Synthesis of [Ir(L1-12)₂(L1-8)] heteroleptic complex

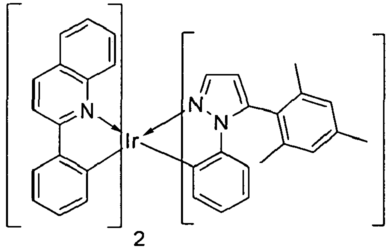

[Ir(L1-12)₂(L1-8)]

[Ir(L1-12)₂(L1-8)]₋heteroleptic complex was obtained using the same conditions as for [Ir(L1-12)₂(L1-1)] in example 9 replacing L1-1 ligand compound by L1-8 ligand compound. Isolated yield after purification by silica gel column chromatography using CH₂Cl₂/hexane 8:2 (v/v) as the eluent was equal to 35 %. No other product could be detected by ¹H-NMR analysis (NMR purity using octamethylcyclotetrasiloxane as internal standard : 100wt%).

The results of the Examples show that the process in accordance with the present invention yields heteroleptic transition metal complexes involving ligands with different main cores (like e.g. phenylimidazole, phenylquinoline, phenylpyrazole type ligands) in good yields and good purities under mild conditions in an easy one step synthesis.

Thus, the process provides materials useful in organic electronic devices in an economically and technically feasible manner.

## Claims

1. A process for the manufacture of heteroleptic complexes of a transition metal M having the general formula [M(L)ₙL'], wherein M is Ir, Rh, Pt or Pd and n is 2 for M = Ir or Rh and n is 1 for M = Pt or Pd and L is a bidentate cyclometallated ligand coordinated to the metal M through covalent metal-C and dative donor atom-metal bonds and L' is a bidentate ligand, by reacting a halo-bridged dimer of general formula [LₙM(µ-X)₂MLₙ] with a ligand compound of formula L'-H or a halo-bridged dimer of general formula [L'ₙM(µ-X)₂-ML'ₙ] with a ligand compound of formula L-H where (µ-X) represents a bridging halide in a solvent mixture of an organic solvent and water comprising more than 25 vol% of water at a temperature of from 50 to 260 °C, in the presence of from 0 to 5 molar equivalents relative to the number of moles of halide X- ion introduced into the reaction mixture through the halo-bridged dimer of a scavenger for halide X- ion and in the presence of from 0 to less than 1 mole, relative to the molar amount of transition metal in the halo-bridged dimer, of an added salt and of from 0 to 10 vol%, based on the total volume of the solvent mixture, of a solubilisation agent increasing the solubility of the halo-bridged dimer in the reaction mixture.

2. The process in accordance with claim 1 wherein at least one of ligands L and L' used is a bidentate ligand of general formula (1) 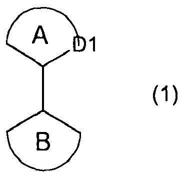 wherein
A is selected from the group consisting of five- or six-membered aryl or heteroaryl rings and fused rings, which is bound to the transition metal via the D1 donor atom and may be substituted with a substituent R,
B is selected from the group consisting of five- or six-membered aryl or heteroaryl rings and fused rings, which may be substituted with a substituent R and which ring is coordinated to the transition metal through a covalent metal-carbon bond, and
A and B are linked through a covalent C-C, C-N or N-N bond.

3. The process in accordance with claim 2 wherein a substituent R,
which may be the same or different on each occurrence, is selected from halogen, NO₂ CN , NH₂, NHR¹, N(R¹)₂, B(OH)₂, B(OR¹)₂, CHO, COOH, CONH₂, CON(R¹)₂, CONHR¹, SO₃H, C(=O)R¹, P(=O)(R¹)₂, S(=O)R¹, S(=O)₂R¹, P(R¹)₃⁺, N(R¹)₃⁺, OH, SH, Si(R¹)₃, a straight chain substituted or unsubstituted alkyl or alkoxy group having 1 to 20 carbon atoms or a branched or cyclic alkyl or alkoxy group with 3 to 20 carbon atoms, wherein in each instance one or more non-adjacent CH₂ groups may be optionally replaced by -0-, -S-, -NR¹-, -CONR¹-, -CO-O-, -CR¹=CR¹- or ―C≡C-, a haloalkyl, a substituted or unsubstituted aromatic or heteroaromatic ring system having 5 to 30 ring atoms or a substituted or unsubstituted aryloxy, heteroaryloxy or heteroarylamino group having 5 to 30 ring atoms or wherein two or more substituents R, either on the same or on different rings may define a further mono- or polycyclic, aliphatic or aromatic ring system with one another or with a substituent R¹,
wherein R¹, which may be the same or different on each occurrence, is selected from a straight chain alkyl or alkoxy group having 1 to 20 carbon atoms or a branched or cyclic alkyl or alkoxy group with 3 to 20 carbon atoms, a substituted or unsubstituted aromatic or heteroaromatic ring system having 5 to 30 ring atoms or a substituted or unsubstituted aryloxy, heteroaryloxy or heteroarylamino group having 5 to 30 ring atoms or wherein two or more substituents R¹, either on the same or on different rings may define a further mono- or polycyclic, aliphatic or aromatic ring system with one another or with a substituent R.

4. The process in accordance with claim 2 or 3 wherein L and L' are both selected from ligands of general formula (1).

5. The process in accordance with any of claims 1 to 4 wherein the transition metal is selected from Pt and Ir.

6. The process in accordance with claim 5 wherein the transition metal is Ir.

7. The process in accordance with at least one of claims 1 to 6 wherein the scavenger for halide ion X⁻ is a silver salt

8. The process in accordance with at least one of claims 1 to 7 wherein the solubilisation agent is dimethyl sulfoxide.

9. The process in accordance with at least one of claims 1 to 8 wherein at least one organic solvent selected from the group consisting of C₁~C₂₀ alcohol, oxanes, C₁~C₂₀ alkoxyalkyl ethers, C₁~C₂₀ dialkyl ethers, C₁~C₂₀ alkoxy alcohols, diols or polyalcohols, polyethylene glycols, N-methyl pyrrolidone (NMP), dimethyl formamide (DMF) and combinations thereof, preferably at least one selected from a group consisting of dioxane, trioxane, bis(2-methoxyethyl) ether, 2-ethoxyethanol and combinations thereof, is used.

10. The process in accordance with at least one of claims 1 to 9, wherein a ligand L and/or L' is selected from the group consisting of phenylpyridine derivatives, phenylimidazole derivatives, phenylquinoline derivatives, phenylisoquinoline derivatives, phenylpyrazole derivatives, phenyltriazole derivatives and phenyl tetrazole derivatives is used.

11. The process in accordance with at least one of claims 1 to 10 wherein ligand L and/or L' is represented by the following formulae: 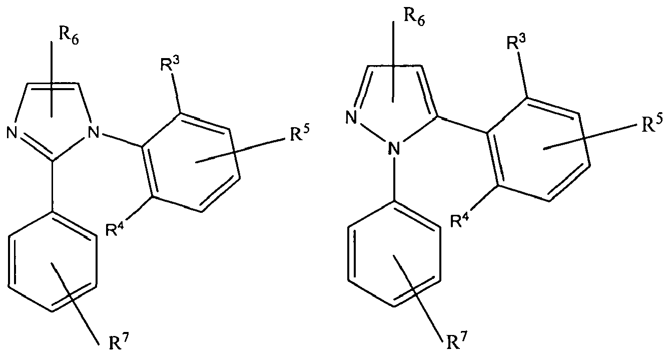 wherein R³ and R⁴ substituents, which may be the same or different at each occurrence are selected from groups other than H, preferably alkyl, cycloalkyl, aryl and heteroaryl groups and wherein R⁵ to R⁷ may be the same or different at each occurrence and may be selected from the group consisting of hydrogen, halogen, alkyl, alkoxy, amino, cyano, alkenyl, alkynyl, arylalkyl, aryl and heteroaryl group

12. The process in accordance with at least one of claims 1 to 11 wherein a ligand L and/or L' is represented by the following general formulae: 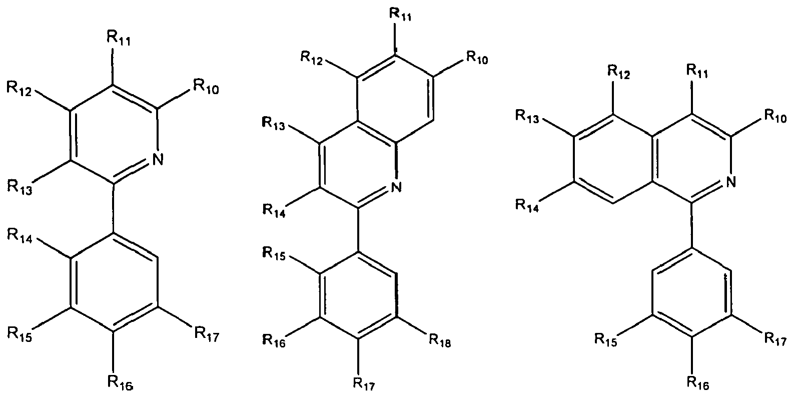 wherein R¹⁰ to R¹⁸ may be the same or different and may be selected from the group consisting of hydrogen, halogen, alkyl, alkoxy, amino, cyano, alkenyl, alkynyl, arylalkyl, aryl and heteroaryl groups.

13. The process in accordance with at least one of claims 1 to 12 wherein a ligand comprising a 9,9'-spirobifluorene or 9,9-diphenyl-9H-fluorene unit is used.

14. The process in accordance with at least one of claims 1 to 13 wherein the reaction is carried out at a temperature in the range of from from 80 to 150 °C.

15. Use of a solvent mixture of an organic solvent and water which comprises more than 25 vol% of water in a process for the preparation of heteroleptic metal complexes [MLₙL'] by reacting halo-bridged dimers [LₙM(µ-X)₂MLₙ] with a bidentate ligand compound of formula L'-H or halo-bridged dimers [L'ₙM(µ-X)₂-ML'ₙ] with a ligand compound of formula L-H.
